# EUROPEAN PATENT APPLICATION

(11) **EP 4 471 601 A1**
(43) Date of publication of application: **04.12.2024**
(21) Application number: 24177100.5
(22) Date of filing: 21.05.2024
(51) Int. Cl.: G06F 11/30, G06F 11/07, G06F 11/34

(54) **SYSTEMS AND METHODS FOR MONITORING AND CONTROLLING DATA CENTER EQUIPMENT**

(30) Priority: 23.05.2023 CN 202310584468
(71) Applicant: Vertiv Corporation, Westerville, OH 43082 (US)
(72) Inventor: LIANG, Stephen Hen I, Evanston, 60201 (US); MCCOWEN, Craig D., Ellisville, 63011 (US); DUNLAP, Kevin Joseph, Bethalto, 62010 (US); COUNTS, Jeffrey Scott, Ballwin, 63021 (US); BUSHMEYER, Joseph, O Fallon, 63368 (US); KAI, SUN, Shenzhen, 518000 (CN)
(74) Representative: Wunderlich & Heim Patentanwälte PartG mbB

(57) **Abstract**

The present disclosure relates to systems and methods for monitoring and controlling data center equipment. A computer-based system is disclosed for monitoring, detecting and generating a corrective action in response to receiving real time information from a monitored data center device. In one embodiment the system incorporates a principal control software (PCS) subsystem stored in a memory of a computer and accessible by a processor of the computer, wherein the computer is being used to monitor operation of a data center device. The PCS subsystem incorporates at least one of stored data, stored algorithms, stored rules or stored tables for analyzing operating information pertaining to the data center device. An agent subsystem is incorporated which is stored in a memory of the data center device. The PCS subsystem and the agent subsystem cooperate to control the data center device in real time to address real time operating conditions which might negatively impact operation of the data center device.

## Description

### FIELD

The present disclosure relates to systems and methods for monitoring and controlling various data center components to avoid damage to such components, and more particularly to systems and methods which are able to monitor for real time temperatures, events, alarms and other real time data, and which are able to instruct servers and other IT devices, as well as cooling units and other data center infrastructure systems, on specific action(s) to take, in real time, to avoid damage to IT and/or infrastructure devices. The present disclosure relates to systems and methods for monitoring and carrying out controlled modification of operation of data center equipment in response to a thermal event.

### BACKGROUND

The statements in this section merely provide background information related to the present disclosure and may not constitute prior art.

Thermal Events affecting a data center device, for example a server, if not addressed promptly with appropriate action, can cause server failure. Thermal events, if not detected and addressed appropriately with suitable corrective action, can still cause a reduction in computing capacity from one or more servers as a result of having to quickly throttle back one or more processors to reduce heat, which could otherwise reduce the life of the equipment.

Accordingly, data center management personnel need the ability to automate a response to a thermal event such as a loss of cooling, either complete or partial, or impending loss of cooling (complete or partial), to be able to carry out a predefined load shedding operation, and to transfer on-going server processing tasks to one or more different servers. It will be appreciated that by the term "load shedding", it is meant a reduction in compute capacity through transfer of compute demand to a different asset, usually a different computer/server in a separate data center (or even sometimes a different computer/server in the same data center). The term "load shedding may also be understood as the suspension of a non-critical task being performed by a computer/server, as well as an orderly shutdown of a computer/server.

The ability to detect and take predetermined corrective actions in response to a complete or partial loss of cooling, or to a detected impending complete or partial cooling loss, would prevent negative computer/server impacts (e.g., computer/server damage), as well as reduce or entirely prevent unplanned computer(s)/server(s) downtime. In addition to actioning events and alarm thresholds, it would be highly valuable if real time data from various data center components such as computers/servers, cooling units, etc., could be captured/collected and monitored in real time. It would also be highly valuable if the captured/collected real time data could be used to further help predict if and when a thermal event is likely to arise, as well as how successful specific actions addressing a specific thermal event are likely to be. Such information would be valuable in helping a system "learn" which one or one or more actions might be best to take, based on the monitored real time data and the results of prior taken correction actions.

### SUMMARY

This section provides a general summary of the disclosure and is not a comprehensive disclosure of its full scope or all of its features.

In one aspect the present disclosure relates to a computer-based system for monitoring, detecting and generating a corrective action in response to receiving real time information from a monitored data center device. The system may comprise a principal control software (PCS) subsystem configured to be stored in a memory of a computer and to be accessed by a processor of the computer. The computer is used to monitor operation of a data center device. The PCS subsystem includes pre-defined information for analyzing operating information pertaining to operation of the data center device. An agent subsystem is also included which is configured to be stored in a memory of the data center device and to communicate with a processor of the data center device. The agent subsystem is further configured to communicate the operating information generated by the data center device to the PCS subsystem. The PCS subsystem is further configured to analyze the operating information received from the agent subsystem using the pre-defined information, and to determine when a situation exists requiring an action to be taken to modify operation of the data center device. The PCS subsystem is further configured to use the pre-defined information to determine and transmit a predetermined action to the agent to be used by the agent to modify operation of the data center device.

In another aspect the present disclosure relates to a computer-based system for monitoring, detecting and generating a corrective action in response to receiving real time information from a monitored data center device. The system may comprise a computer having a first central processing unit (CPU) and a first memory in communication with the first CPU. The system may also include a data center device having a second CPU and a second memory in communication with the second CPU, and where the computer is further configured to communicate with the data center device. The system further includes a principal control software (PCS) subsystem configured to be stored in the first memory and to be accessed by the first CPU of the computer. The PCS subsystem includes pre-defined information for analyzing operating information pertaining to operation of the data center device. The system further includes an agent subsystem configured to be stored in the second memory of the data center device. The agent subsystem is configured to communicate with the second CPU of the data center device, and also to communicate the operating information generated by the data center device to the PCS subsystem. The PCS subsystem is further configured to analyze the operating information received from the agent subsystem and to use the pre-defined information to determine when an operating situation exists requiring an action to be taken to modify operation of the data center device. The PCS subsystem is also configured to use the pre-defined information to determine and transmit a predetermined action to the agent, to be used by the agent, to modify operation of the data center device.

In still another aspect the present disclosure relates to a computer-based method for monitoring, detecting and generating a corrective action in response to receiving real time information from a monitored data center device. The method may comprise using a principal control software (PCS) subsystem installed on a computer to monitor operation of a data center device, and also using an agent subsystem installed on the data center device to communicate operating information concerning the data center device to the PCS subsystem. The method may further include using the PCS subsystem to analyze the operating information received from the agent subsystem. This analysis may involve using pre-defined information accessible to the PCS subsystem to determine when an operating condition arises requiring an action to be taken to modify operation of the data center device. When the PCS subsystem determines that the operating condition has arisen, the PCS subsystem then uses the pre-defined information to determine and transmit a pre-defined action to the agent. The agent is then used to modify operation of the data center device in accordance with the pre-defined action.

Further areas of applicability will become apparent from the description provided herein. It should be understood that the description and specific examples are intended for purposes of illustration only and are not intended to limit the scope of the present disclosure.

### BRIEF DESCRIPTION OF THE DRAWINGS

The drawings described herein are for illustrative purposes only of selected embodiments and not all possible implementations, and are not intended to limit the scope of the present disclosure.

Corresponding reference numerals indicate corresponding parts throughout the several views of the drawings.
Figure 1 is a high level block diagram of one embodiment of a system in accordance with the present disclosure;
Figures 2A and 2B show a high level flowchart to illustrate one example of various operations that may be performed in carrying out a method in accordance with the present disclosure;
Figure 3 is a chart showing some examples of different types of events or conditions that may require prompt actions to be taken by the system, as well as the possible causes behind the events or conditions, and some examples of specific actions that may be taken to address the events or conditions;
Figure 4 is another flowchart showing one specific example of how the system may be operated to detect both excessively high and excessively low temperature conditions affecting one or more data center devices, and what actions may be taken to address the out-of-bounds thermal conditions; and
Figure 5 shows a system in accordance with another embodiment of the present disclosure which involves using the service processors of both IT and infrastructure devices, as well as a dedicated management network, to receive real time temperature data, alarms and events, and to use a principal control software subsystem of the present disclosure to communicate appropriate corrections actions to be taken back to the IT and infrastructure components.

### DETAILED DESCRIPTION

Example embodiments will now be described more fully with reference to the accompanying drawings.

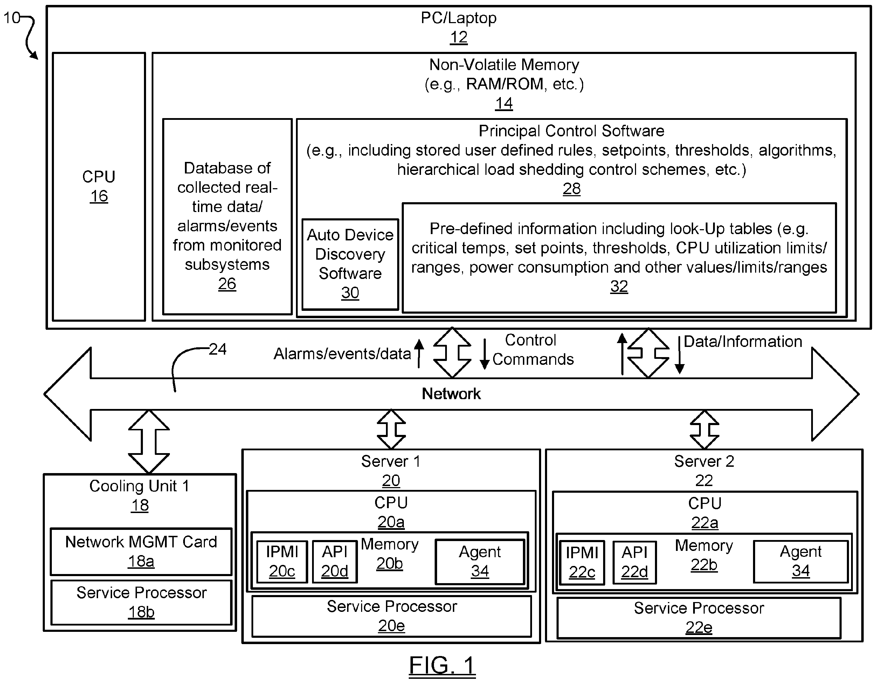

Referring to Figure 1 a system 10 is shown in accordance with one embodiment of the present disclosure. The system 10 in this example may include a computer 12 which may be a personal computer (PC), a laptop, a computing tablet, a smartphone or other form of personal digital assistant. Still further, the computer 12 may also be a server. Merely for convenience, the following discussion will reference the computer as "PC 12", with it being understood that the present disclosure is not limited to use with only a PC.

In the example embodiment shown in Figure 1, the system 10 includes a non-volatile memory 14 (e.g., RAM/ROM, etc.), hereinafter simply "memory 14", and a CPU 16, and is in real time communication with at least one cooling unit 18 and at least one server 20. In this example a second server 22 is shown. Communication may be via at least one network 24. Network 24 may be a wired or wireless network, and in many instances will be a wired Local Area Network (LAN) or wireless LAN, although the present disclosure is not limited to use with any specific type of network. Also, it will be appreciated immediately two or more cooling units may be monitored and controlled using the system 10, as well as more than two servers. It is also possible that other data center devices (e.g., PDUs, network switches, routers, KVM appliances, etc.) may be accessed, monitored and/or controlled by the system 10. As such, the present disclosure is not limited to use with only cooling units and servers. Furthermore, the system 10 may be at least implemented at a location remote from a data center where the devices and subsystems are located, and potentially may also be implemented in a cloud computing configuration.

The memory 14 may be used to store collected real time operating data, events, alarms, etc., in a database 26. An important feature of the system 10 is a principal control software ("PCS") subsystem or module 28 (hereinafter simply "PCS subsystem 28") which is used in determining what action or actions are suitable for the system 10 to take in response to a wide variety of detected thermal and/or alarm and/or event conditions. The PCS subsystem 28 may be configured with stored user-defined rules, tables, charts or look-up tables, user-defined high/low temperature thresholds, as well as one or more algorithms for analyzing temperature and/or event/alarm conditions, and one or more user-defined hierarchical load shedding schemes to shift loads from one or more servers to one or more other servers. The PCS subsystem 28 may also include pre-defined processor utilization information for helping to make load shedding decisions, as well as specific temperature thresholds for determining when a shutdown decision should be made with regards to any server, cooling unit or other component in the data center that is being monitored. It will also be appreciated that if a cooling unit is not located in the same space/cabinet as the server(s) which it is cooling, then it would be preferable to obtain a temperature from each server being cooled by the cooling unit. The CPU temperature of each server is likely the most preferable temperature to be used for monitoring and control purposes, but it would also be acceptable to use one or more temperature readings provided by one or more external temperature sensors in close proximity to each of the servers being monitored. Finally, the PCT subsystem 28 may include an auto device discovery software subsystem 30 to automatically detect, and optionally to provision, as well, a wide variety of data center devices.

Referring further to Figure 1, the PCS subsystem 28 of the system 10 may also include user predefined information including one or more stored set points, one or more stored operating values such as stored maximum and/or minimum temperature values, stored processor/CPU utilization values, stored power consumption values, and stored look-up tables 32 for correlating various data with various available actions and/or other data. The look-up tables 32 may also include user pre-defined critical temperature thresholds (high and low) and/or one or more temperature setpoints, user pre-defined processor/CPU utilizations or ranges, user pre-defined power consumption limits or ranges, one or more predefined rates of temperature change, and any other types of data, limits or ranges that may be useful in taking action to address various possible temperature/alarm/event conditions that arise in a data center.

With further reference to Figure 1, the system 10 also includes an agent software subsystem or module 34 (hereinafter simply "agent subsystem 34") that will be installed in each server 20 and 22, and which forms a portion of the PCS subsystem 28. The agent 34 may be stored in a non-volatile memory 20b (e.g., RAM, ROM, etc.) operably associated with a CPU 20a of the server 20, as well as in a non-volatile memory 22b of a CPU 22a of the server 22. The agent subsystems 34 each communicate with their respective CPUs 20a or 20b and are able to communicate real time temperatures, events, alarms or other forms of operating data or information to the PCS subsystem 28, and also to receive instructions or commands from the PCS subsystem 28 which may be communicated to its respective CPU 20a or 20b. In some embodiments the agent 34 may be strictly software, and in other embodiments the agent may include one or more hardware components together with software. Furthermore, in some embodiments, the agent 34 may be a "generic" agent configured to collect system data (e.g., CPU temperature, fan speed, return air temperature, supply air temperature (via USB), etc.), which may be slightly modified or customized to adapt it to a specific server, cooling unit, etc. All of the data points obtained by the generic agent may be accessible through a network (e.g., network 24) using a suitable communications protocol (e.g., SNAP (Simple Network Management Protocol)). In its various forms, the agent 34 transmits real time operating data, events and alarms to the PCS subsystem 28, and also receives instructions and commands from the PCS subsystem 28 in real time for use by its associated CPU 20a or 22a.

In some embodiments the system 10 with the PCS subsystem 28, the agent(s) 34, the database 26 and the pre-defined user information 32 may all be installed on pre-existing components within a facility or data center, for example on a pre-existing PC, laptop, computing tablet, smartphone, personal digital assistant or monitoring server, and also on one or more pre-existing data center devices such as servers, cooling units and other devices. In this instance, the system 10 would be understood as being retrofitted into such existing components, rather than being integrated into the PC 12, the cooling unit 18 and the servers 20 and 22 before such components are initially installed for use.

With further reference to Figure 1, typically the cooling unit 18 will include a network management card 18a and a service processor 18b. The network management card 18a handles all incoming and outgoing communications with external devices and systems. The service processor 18b is a dedicated processor that many modern day data center infrastructure and IT components include for real time dedicated monitoring and collection of device health information (e.g., real time CPU temperature data, real time CPU utilization data, real time fan speed data, real time power consumption data, as well as generating alarms, events, etc.).

In Figure 1 the servers 20 and 22 are also shown as including their own IPMI software modules (Intelligent Platform Management Interface software) 20c and 22c respectively, their own Application Programming Interface ("API") 20d and 22d, and their own service processors 20e and 22e, respectively. For operation of the PCS subsystem 28, the IPMls 20c/22c and the service processors 20e/22e may not be necessary, but may be used by the system 10 if they are present. If IPMI software modules or APIs are incorporated, they may be configured to provide the PCS subsystem 28 with real time information about the PC/laptop/server (computer) current operating condition. Having this real time information allows the cooling unit 18 to respond in real time to changing conditions, for example real time changes in temperature. Without the IPMI/API providing this real time data, the cooling unit 18 might need to wait for data from another data input (e.g., a temperature sensor), or be unaware of the change in condition altogether.

As noted above, the PCS subsystem 28 forms an important part of the system 10 and enables monitoring of real time data, alarms and events that may be detected or generated by any one or more of the cooling unit 18 and/or the servers 20 and 22. The PCS subsystem 28 is able to analyze and/or compare the received real time data, events or alarms from the cooling unit 18 and the servers 20 and 22, and to determine, based on user-predefined stored operating values, stored rules, and/or real time calculations, exactly what type of action needs to be taken to address the detected condition. Possible actions may include, for example, shedding a portion of a load from one server 20 to the other server 22 based on received real time temperature data, commanding a change in a real time cooling output from the cooling unit 18 to increase or decrease its output, or even commanding a shutdown of one or more servers or the cooling unit 18. The appropriate action to take for a given detected condition is determined by the PCS subsystem 28 in part by accessing its stored, user-defined rules, and/or accessing its stored look-up tables, and/or carrying out one or more stored algorithms, after analyzing the obtained data. In most instances the data used for analysis is expected to be data which is obtained in real time, but previously obtained and stored data, stored in and available from the database 26, may also be used by the PCS subsystem 28 as part of its analysis. Such stored data may be used by the PCS subsystem 28 to further tailor or modify its analysis and/or calculations, to provide a "self-learning" or "predictive" type of system that learns from the results of past actions that the PCS subsystem has taken. Stored data may also be used by the PCS subsystem 28 to possibly better recognize trends over time. From recognized trends, the PCS subsystem 28 may be even better able to recognize or predict cooling unit 18 failures, loss of redundancy and/or reduction in cooling capacity or reliability. In most cases it is expected that the appropriate action to be taken by the PCS subsystem 28 will be one which prevents a complete shutdown of one of the servers 20 or 22 or the cooling unit 18, unless a complete shutdown is determined to be required to prevent imminent damage to one of the foregoing devices.

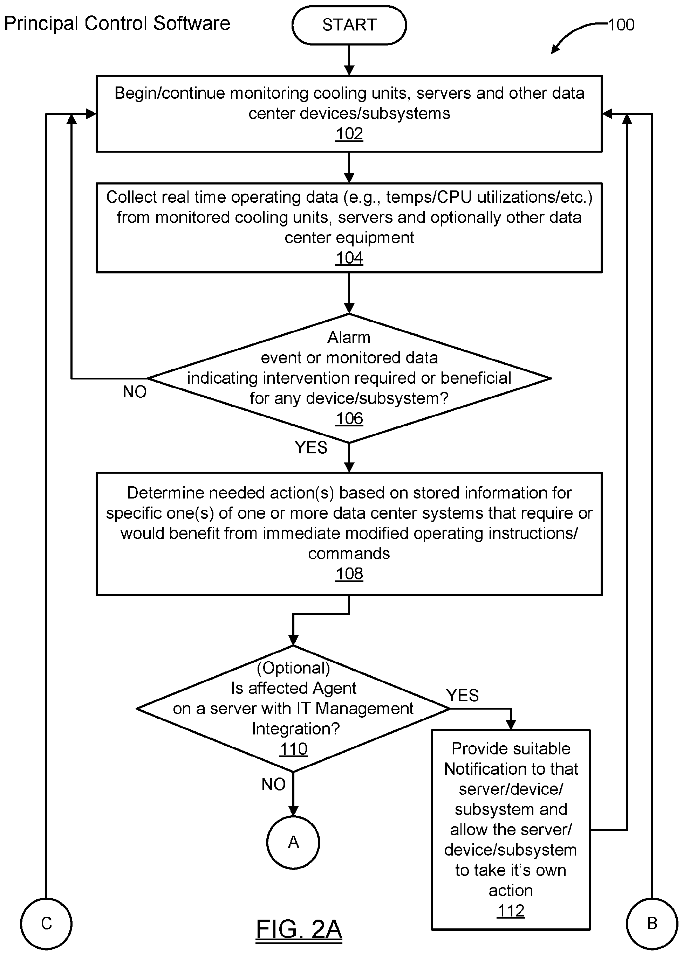

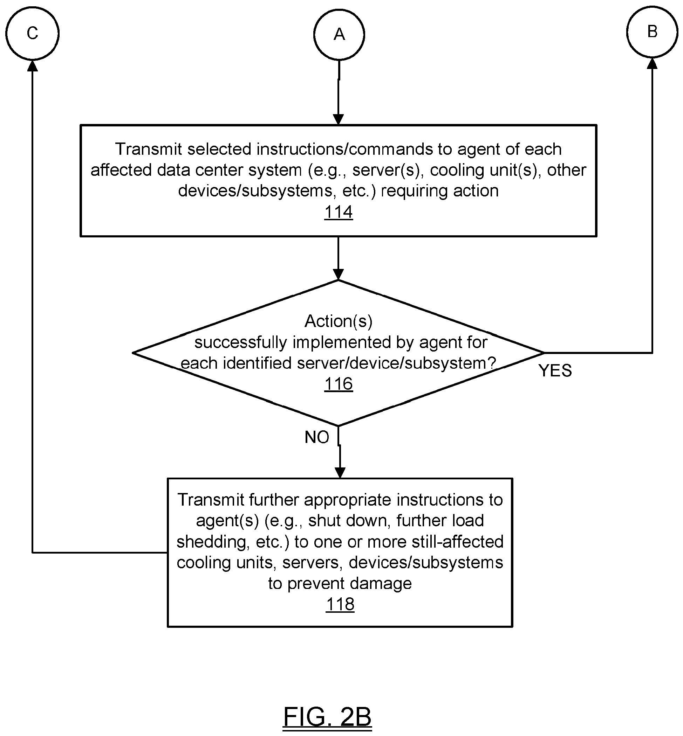

Referring now to Figures 2A and 2B, a flowchart 100 is presented showing one example of various operations that may be performed by the system 10 of the present disclosure in monitoring the cooling unit 18 and the servers 20 and 22, and determining exactly what type of real time action is needed for a particular detected condition. It will be appreciated that the system 10 is not limited to only the actions shown in the flowchart 100, and similarly may potentially be carried out without all of the operations shown in the flowchart 100.

At operation 102 the system 10 begins (or continues) monitoring the cooling unit(s) 18, the servers 20 and 22, and any other data center devices or subsystems in a given facility or data center. At operation 104 real time data such as one or more of device temperatures, CPU utilization, alarms, events, fan speeds, power consumptions, etc. are collected from all or some of the data center devices and systems, including the cooling unit 18 and one or both of the servers 20 and 22. Optionally, but preferably, this data is stored by the system 10, such as in the database 26 (Figure 1).

At operation 106 the system 10 checks to determine if a received alarm, a received event or any received data for any device or subsystem requires some immediate action. If not, operations 102 and 104 are repeated. If some immediate action is required, then at operation 108 the system 10 determines the needed action by accessing is stored data, stored temperature and/or processor utilization thresholds, as well its stored look-up tables, and/or carrying out one or more stored algorithms, etc. These actions are taken in real time and typically carried out within milliseconds or less.

At operation 110 an optional check may be included to determine if the agent 34 which reported the alarm, event or data giving rise to a need for immediate action is present on a server with an IT Management Integration subsystem. If this subsystem is present on the affected server, then the system 10 may simply provide a notification to the affected server 20 or 22 that a condition is present requiring action, and the affected server may make its own determination as to a suitable action to be taken, as indicated at operation 112. In that event, operations 102-110 will then be repeated.

If the optional check at operation 110 is employed and produces a "NO" answer, then the system 10 transmits the needed instructions/commands to the agent 34 of the affected server or other data center device (e.g., cooling unit 18) requiring action, as indicated at operation 114. In the case of the cooling unit 18, this instruction/command may be received by the network management card 18a. If an instruction/command is sent to one of the servers 20 or 22, then it will be received and acted on by the agent 34 associated with the affected server. In this instance the agent 34 transmits the instruction or command to its associated CPU (20a or 20b) which then controls the server to implement the instruction or command to thus modify operation of the server, or potentially to shut down the server completely.

At operation 116 the system 10 may make a determination if the instruction/command was received and successfully acted on by the cooling unit 18 or server 20 or 22. This determination may be made by waiting a short predetermined time period (e.g., one to a few seconds) and if no further response is received by the affected device, then concluding that the instructed/commanded action was successfully carried out. If no such further communication is received from the affected device, then operations 102-112 may be repeated. Otherwise, if the PCS subsystem 28 receives a further communication from the affected device indicating that the instruction/command was not successfully carried out, then a further action may be taken (typically in real time, within milliseconds or less), as indicated at operation 118, to transmit one or more predefined additional instructions/commands to the affected device as needed to properly address the situation. Such additional instructions/commands may involve one or more of a shutdown command to the affected device, and/or implementing a further degree of load shedding for a given server, cooling unit or other data center device to ameliorate the situation and prevent damage to the affected data center device(s).

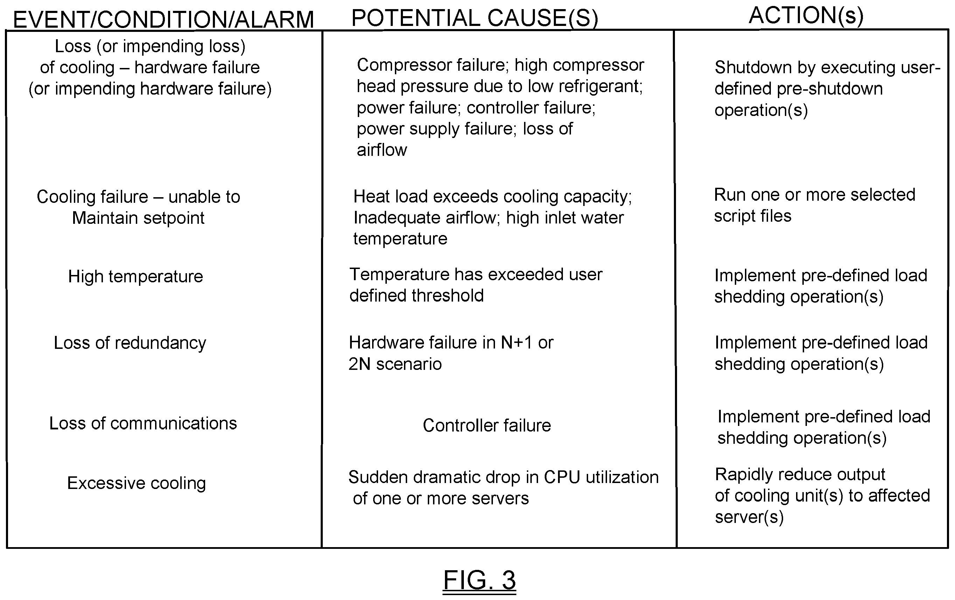

Referring briefly now to Figure 3, a table is shown to illustrate some examples of events, conditions or alarms that may be monitored for, detected and acted on by the system 10, along with examples of causes of such events/conditions/alarms, and possible action(s) to be taken by the system 10. This is but one example, and those skilled in this art will appreciated that a wide range of other specific alarms, conditions or events could potentially be monitored for and addressed using the system 10.

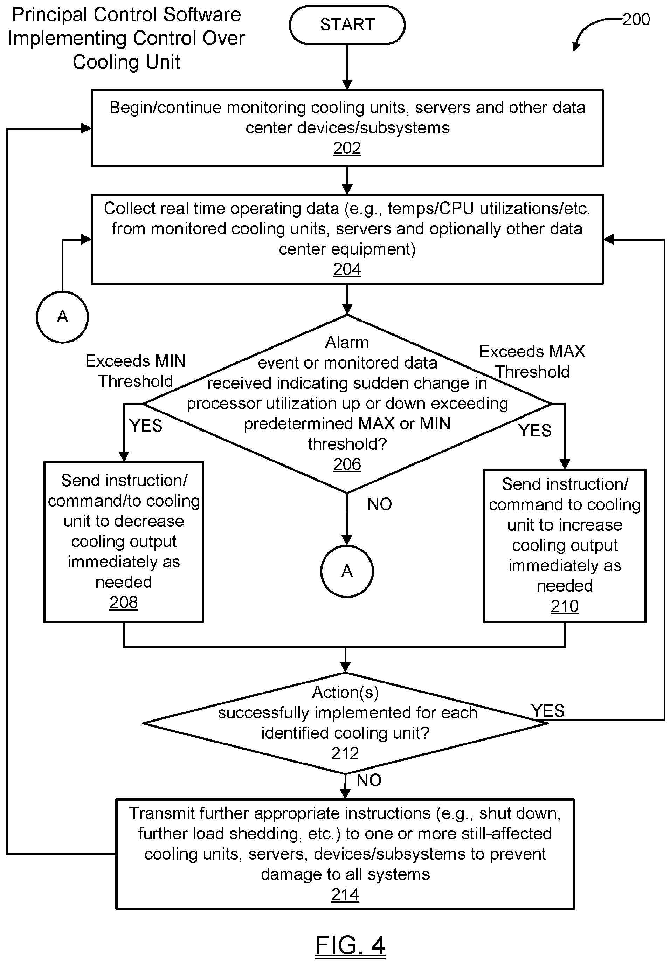

Referring to Figure 4, a flowchart 200 is shown to illustrate two different situations where the system 10 can be used to monitor for, detect and transmit needed corrective instructions/commands to address both a high temperature condition, as well as a low temperature condition, with a given one or more devices or systems within a data center. The flowchart 200 is further intended to show that the system 10 can work to address two dramatically different scenarios, one being where an operation of the server 20 or 22 is such that the server needs to be instructed by the PCS subsystem 28 to take a specific action, while possibly holding operation of the cooling unit 18 steady, and the other being that only the cooling unit 18 needs to be instructed/commanded to take a specific action, while operation of the server(s) continues without modification by the PCS subsystem 28.

Initially at operation 202 the system 10 begins/continues monitoring the cooling unit 18 (or cooling units, if more than one is present), the servers 20 and 22 and any other designated data center devices. At operation 204 the system 10 collects real time operating data (e.g., temperatures/CPU utilization values, as well as alarms/events, etc.) from monitored cooling unit 18 and the servers 20 and 22, and any of the other designated data center equipment being monitored. At operation 206 a check is made by the PCS subsystem 28 to determine if an alarm, event or data has been received indicating a sudden change in processor utilization up or down, for at least one of the servers 20 or 22, which exceeds a user predefined MAX or MIN temperature threshold. If the check indicates that a MIN temperature threshold is exceeded, meaning that the temperature of a server 20 or 22 has dropped below the user-predetermined MIN operating temperature, then the PCS subsystem 28 sends an appropriate instruction/command, as indicated at operation 208, to decrease the cooling output of the cooling unit 18 immediately and in real time as needed. Such a situation might develop with one of the servers 20 or 22 if, for example, one or the other was performing an extremely computationally complex task requiring a maximum cooling output from the cooling unit 18, and then the task completed, causing the processor's utilization to drop dramatically. If the cooling unit 18 is a liquid cooling unit, then a situation could rapidly develop where the temperature of a cold plate on which the processor of the server 20 or 22 is supported continues to drop due to lack of processor generated heat, eventually reaching the dew point, resulting in condensation production on the cold plate and on the processor. This would be a highly undesirable condition.

Continuing with Figure 4, if the check at operation 206 instead indicates that a user predefined MAX temperature threshold has been exceeded for one or the other of the servers 20 or 22, then the PCS subsystem 28 determines and generates the needed instruction/command in real time, and sends same to the cooling unit 18 in real time to increase cooling to the affected server(s) 20 or 22, as indicated at operation 210. Such a MAX temperature condition may arise if one or the other one of the servers 20 or 22 goes from a very low processor utilization to near 100% utilization in a very short time. If action is taken at either of operations 208 or 210, then operation 212 may be performed where the PCS subsystem 28 checks to make sure the instructed/commanded action has been successfully implemented. If the instructed/commanded action has been successfully implemented, then operations 204-210 may be repeated. If the instructed/commanded operation is determined to have not been successfully completed, then the PCS subsystem 28 may transmit one or more further appropriate instructions to the cooling unit 18 or one, or both, of the servers 20 and/or 22, to prevent damage to all of the subsystems.

Thus, the flowchart 100 makes clear that the PCS subsystem 28 and the agents 34 can be used to help control real time operation of the servers 20 and 22 to maintain desired operating conditions, while the flowchart 200 makes clear that the PCS subsystem 28 and the agents 34 can be used to control real time operation of the cooling unit 18 in response to MIN or MAX temperature situations that have arisen with operation of the servers 20 and/or 22.

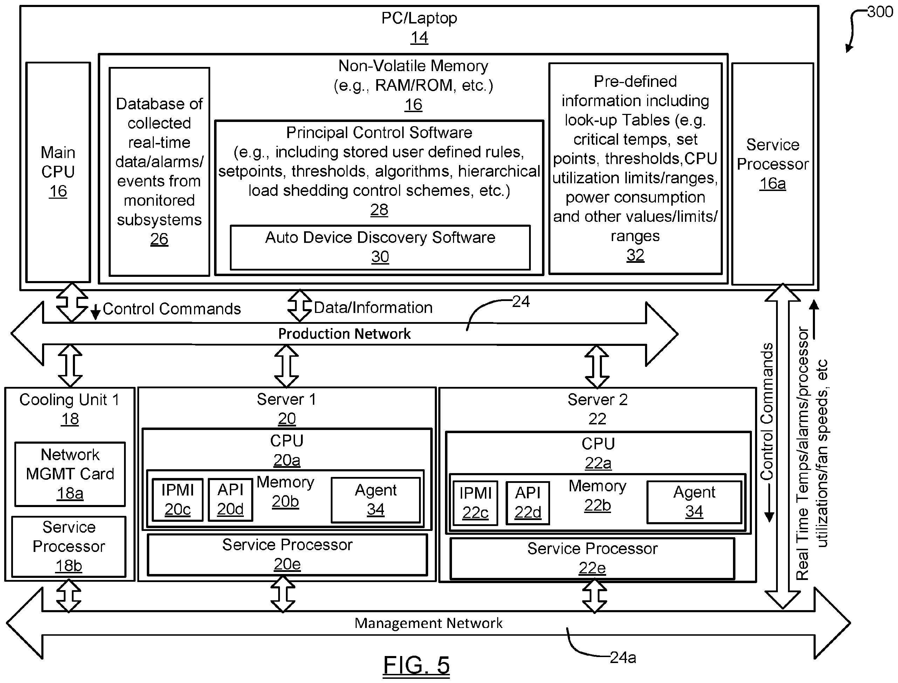

Referring briefly to Figure 5, a system 300 is shown in accordance with another embodiment of the present disclosure. The system 300 is substantially similar to the system 10 of Figure 1, and components in common with those shown in Figure 1 are denoted with the same reference numbers used in Figure 1. The system 300 is able to make use of a service processor 16a that is present in the server/PC 14, as well as an independent management network 24a that is present in the data center facility where the cooling unit 18 and the servers 20 and 22 are located. The management network 24a is a network dedicated to communicating only data and information pertaining to the health of the data center devices (e.g., temperatures, CPU utilizations, fan speeds/power consumption data, memory utilization, etc.) from services processors 18b, 20e, 22e. This frees up additional bandwidth on the network 24 for communicating with the data center devices to carry out work for users, as well as freeing up main CPU 16 bandwidth of the server/PC 14 for carrying out user computing tasks. In such a configuration, the network 24 is often referred to as a "Production" network, which indicates it is being used exclusively to carry out user tasks and work, rather than communicating system health related data. So with the system 300, the PCS subsystem 28 operates in the same way as described for the system 10, but communicates bi-directionally, principally or exclusively, with the service processors 16a, 18b, 20e and 22e, over the management network 24a. The operations described in the flowchart 100 may also be the same for monitoring, detecting and addressing data, alarm and event conditions requiring action.

The systems 10 and 300, as well as the methods described herein, can all be supplemented with collected and stored historical real time data, alarms and events over time, which can optionally be used to modify existing pre-defined temperature MIN and MAX set points, algorithms, tables or charts, or look-up tables to enable the systems 10 and 300 to be better predict what specific type of instructions/commands should be generated for a given condition. As such, the systems 10 and 300 can be configured to be intelligent, "self-learning" systems which leverage knowledge of how the cooling unit 18 and the servers 20 and 22 have operated over time, in response to various specific instructions and commands, to more efficiently operate the systems 18-22.

The various embodiments of the system 10 and the system 300 can be implemented in new PCs, laptops, computing tablets, smartphones, personal digital assistants and monitoring servers, as well as in new data center equipment such as cooling units and servers, or retrofitted to existing subsystems and devices. The various embodiments can further be cost effectively implemented without requiring expensive or extensive hardware or software modifications to existing components, and in most instances without removal of an existing data center device from its installed location in a data center.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

## Claims

1. A computer-based system for monitoring, detecting and generating a corrective action in response to receiving real time information from a monitored data center device, the system comprising:
a principal control software PCS subsystem configured to be stored in a memory of a computer and to be accessed by a processor of the computer, wherein the computer is used to monitor operation of a data center device;
the PCS subsystem including pre-defined information for analyzing operating information pertaining to operation of the data center device;
an agent subsystem configured to be stored in a memory of the data center device and to communicate with a processor of the data center device, the agent subsystem further being configured to communicate the operating information generated by the data center device to the PCS subsystem; and
the PCS subsystem further being configured to:
analyze the operating information received from the agent subsystem using the pre-defined information to determine when a situation exists requiring an action to be taken to modify operation of the data center device; and
to use the pre-defined information to determine and transmit a predetermined action to the agent to be used by the agent to modify operation of the data center device.

2. The system of claim 1, wherein the PCS subsystem is configured to be stored in a non-volatile memory of the computer.

3. The system of claim 1, wherein the computer comprises at least one of:
a server;
a personal computer;
a laptop computer;
a computing tablet;
a smartphone; or
a personal digital assistant.

4. The system of claim 1, wherein the agent subsystem comprises a software module configured to be stored in a non-volatile memory of the data center device.

5. The system of claim 1, wherein the pre-defined information comprises at least one of:
a stored set point;
a stored operating value;
a stored rule; or
a stored algorithm;
a stored table;
a stored chart; or
a stored look-up table,
for determining when the situation arises for taking the action, and determining the pre-determined action to be taken.

6. The system of claim 5, wherein the specific action transmitted by the PCS subsystem includes a command to modify operation of a cooling unit.

7. The system of claim 6, wherein the command to modify operation of a cooling unit comprises:
a command to increase a cooling output of the cooling unit; or
a command to decrease a cooling output of the cooling unit.

8. The system of claim 1, wherein the data center device comprises a server, and the PCS subsystem is configured to communicate bi-directionally via a network with a CPU of the server.

9. The system of claim 1, further comprising a cooling unit, and wherein the PCS subsystem is configured to communicate bi-directionally via a network with the cooling unit.

10. The system of claim 1, further comprising a database contained in the memory of the computer and accessible by the PCS subsystem for collecting historical operating information received from the at least one data center device over a period of time.

11. The system of claim 10, wherein the PCS subsystem is further configured to use the historical operating information stored in the database to further control operation of the at least one data center device.

12. The system of claim 1, wherein the PCS subsystem further includes an auto discovery software subsystem for discovering data center devices.

13. A computer-based method for monitoring, detecting and generating a corrective action in response to receiving real time information from a monitored data center device, the method comprising:
using a principal control software PCS subsystem installed on a computer to monitor operation of a data center device;
using an agent subsystem installed on the data center device to communicate operating information concerning the data center device to the PCS subsystem;
further using the PCS subsystem to analyze the operating information received from the agent subsystem, using the pre-defined information, to determine when an operating condition arises requiring an action to be taken to modify operation of the data center device;
when the PCS subsystem determines that the operating condition has arisen, then further using the pre-defined information to determine and transmit a pre-defined action to the agent; and
using the agent to modify operation of the data center device in accordance with the pre-defined action.

14. The method of claim 13, wherein using the pre-defined information comprises using at least one of:
a stored set point;
a stored operating value;
a stored rule;
a stored algorithm;
a stored table;
a stored chart; or
a stored look-up table,
for determining at least one of when the operating condition has arisen or to determine the predetermined action.
